# EUROPEAN PATENT APPLICATION

(11) **EP 0 933 316 A1**
(43) Date of publication of application: **04.08.1999**
(21) Application number: 99102028.0
(22) Date of filing: 01.02.1999
(51) Int. Cl.: B65G 49/06

(54) **Handling apparatus for plate-shaped materials**

(30) Priority: 02.02.1998 JP 2098298
(71) Applicant: Asahi Glass Company Ltd., Chiyoda-ku, Tokyo 100-8305 (JP)
(72) Inventor: Hayashi, Hideo c/o Asahi Glass Company, Ltd., Yokohama-shi, Kanagawa (DE); Kishi, Yasuhiko c/o Asahi Glass Company, Ltd., Yokohama-shi, Kanagawa (DE); Chosokabe, Hitoshi c/o Asahi Glass Company, Ltd., Yokohama-shi, Kanagawa (DE)
(74) Representative: Müller-Boré & Partner Patentanwälte

(57) **Abstract**

An endless chain (96) is wound on a circumferential portion of a turntable (24) which has rests (18A-D) provided thereon. The endless chain (26) is moved on the circumferential portion by a motor (30) to locate a selected rest (18A-D), by the shortest moving distance, at position where a remover (14) carries out a plate removing operation.

## Description

The present invention relates to a handling apparatus for plate-shaped materials, in particular, a handling apparatus for plate-shaped materials wherein a remover removes glass plate materials (plate-shaped materials) leaned against and stocked on rests, and wherein the removed glass plate materials are transferred to a working apparatus.

Glass plate materials which have not been worked into products are leaned against rests depending on sizes thereof to be temporarily stocked. After the stocked glass plate materials are removed by being sucked and held by a remover with suction pads one by one, the glass plate materials are taken over to a transferring apparatus, and the glass plate materials are transferred to a working apparatus (cutting and breaking apparatus) by the transferring apparatus.

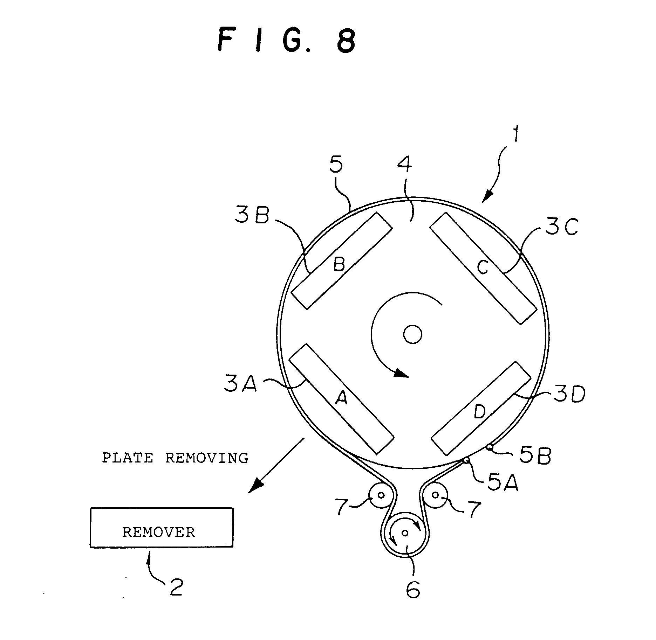

In Figure 8 is shown a plan view of a conventional handling apparatus which handles glass plate materials as in the procedure as stated.

The handling apparatus shown in this Figure comprises a stocker 1 and a remover 2. The stocker 1 includes for four of "A" rest 3A, "B" rest 3B, "C" rest 3C and "D" rest 3D to stock four different kinds of glass plate materials in terms of sizes. The rests 3A - 3D are provided at equal intervals on a turntable 4 so as to be concentric with one another. When the turntable 4 is rotated, one of the rests 3A - 3D is located at a plate removing position for the remover 2, and the remover 2 removes a glass plate material which is on the rest located at the plate removing position.

The rotating device for the turntable 4 is one wherein a discontinuous chain 5 is wound on a circumferential surface of the turntable 4, the chain has both ends 5A and 5B fixed to the turntable 4, and the chain 5 is moved on the circumferential surface by a driving sprocket 6 to rotate the turntable 4. Reference numeral 7 designates tensioner sprockets for applying tension to the chain 5.

Since the conventional handling apparatus has both ends 5A and 5B of the discontinuous chain 5 fixed to the turntable in the vicinity of the rest 3D as shown in Figure 8, the conventional handling apparatus has a disadvantage in that the rest 3D can not be located at the plate removing position by movement in the clockwise direction in Figure 8 as the shortest movement and that the rest 3D is required to be located by a roundabout way in the counterclockwise direction in Figure 8.

As stated, the conventional handling apparatus takes time loss in handling glass plate materials in some cases, creating a problem in that a smooth operation without a waste of time is difficult.

It is an object of the present invention to eliminate these problems and to provide a handling apparatus for plate-shaped materials capable of handling plate-shaped materials smoothly without a waste of time.

The present invention provides a handling apparatus for plate-shaped materials comprising a plurality of rests for supporting plate-shaped materials in a leaning position; a turntable which has the rests provided thereon and which is rotatably provided; a remover which is provided near to the turntable and which can remove a plate-shaped material leaned against one of the rests provided on the turntable; and a rotary device which can rotate the turntable to locate a selected rest among the rests at a position to remove the plate-shaped material by the remover; wherein the rotary device comprises an endless member wound on a circumferential portion of the turntable and a driving motor for moving the endless member on the circumferential portion to rotate the turntable in a certain direction.

In a first preferred mode, the endless member which is wound on the circumferential portion of the turntable is moved on the circumferential portion by the driving motor to rotate the turntable, locating the selected rest among the rests on the turntable at the plate removing position. The arrangement wherein the endless member rotates the turntable can locate the selected rest at the plate removing position by the shortest moving distance since the turntable can be rotated in one rotational direction and the opposite rotational direction in endless fashion. As a result, handling plate-shaped materials can be carried out smoothly without a waste of time in the first preferred mode.

In a second preferred mode, a chain is used as the endless member, and the chain is moved on the circumferential portion by the driving motor to rotate the turntable by frictional resistance between the chain and the turntable. Use of the chain can rotate the turntable with a simple driving mechanism. Although the turntable may be rotated by the frictional resistance, the turntable may have the circumferential portion provided with sprocket teeth and the chain may be engaged with the teeth to rotate the turntable. The teeth are not required to be provided throughout the entire circumferential portion of the turntable. The teeth may be provided only on some locations on the circumferential portion of the turntable. The turntable has a rotational shaft provided with a sprocket without providing the teeth on the turntable, and the chain may be wound on the sprocket to rotate the turntable.

In a third preferred mode, the remover advances and withdraws an arm supporting member with respect to the selected rest by means of an advancing and withdrawing device to set an arm at the optimum position in a first step. Next, the arm is rotated to an erecting position by a turning device to suck and hold a plate-shaped material by a suction device on the arm. After that, the arm is rotated to a lying position by the turning device, and the plate-shaped material sucked by the suction device is delivered to the transferring apparatus.

According to the remover thus constructed, a plate-shaped material can be removed and delivered to the transferring apparatus in a smooth way. Since the position of the arm to the selected rest can be arbitrarily set by the advancing and withdrawing device, it is advantageous when a plurality of plate-shaped materials are leaned against the selected rest. Specifically, in some cases, suction of a second plate-shaped material can not be ensured because of the presence of a positional shift between the second plate-shaped material and the suction device after a first plate-shaped material has been removed. In such cases, the third mode can ensure the suction of the second plate-shaped material and its subsequent plate-shaped materials since the position of the suction device to the second plate-shaped material can be set at the optimum position by the advancing and withdrawing device. In addition, the advancing and withdrawing device can be utilized to slightly move a sucked plate-shaped material so as to apply vibration to the sucked plate-shaped material, preventing a double catch of plate-shaped materials. For this purpose, a sensor for detecting such a double catch is preferably provided because it is enough to apply slight vibration to the sucked plate-shaped materials only when the sensor detects the double catch. The measures to apply the slight vibration to plate-shaped materials is not limited to the advancing and withdrawing device, and the application of slight vibration may be carried out by a driving motor for turning the arm.

In the drawings:
Figure 1 is a perspective view of the entire handling apparatus for glass plate materials according to an embodiment of the present invention;
Figure 2 is a plan view of the handling apparatus shown in Figure 1;
Figure 3 is a perspective view showing the structure of the remover and the transferring apparatus shown in Figure 1;
Figure 4 is a side view explaining the movement of the remover shown in Figure 3;
Figure 5 is a block diagram showing a control system for the handling apparatus shown in Figure 1;
Figure 6 is a Table showing information about rests which is stored in a RAM of a CPU in the handling apparatus;
Figure 7 is a flowchart showing the movement of a stocker of the handling apparatus; and
Figure 8 is a plan view of an example of a conventional handling apparatus for glass plate materials.

Now, a preferred embodiment of the handling apparatus for plate-shaped materials according to the present invention will be described in detail, referring to the accompanying drawings.

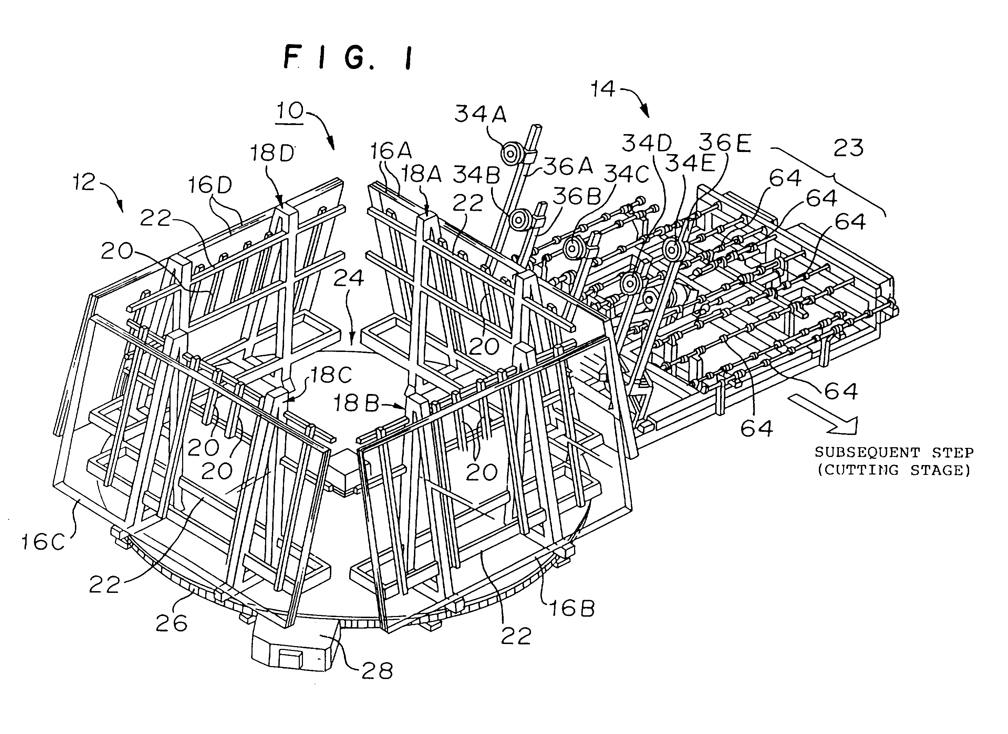

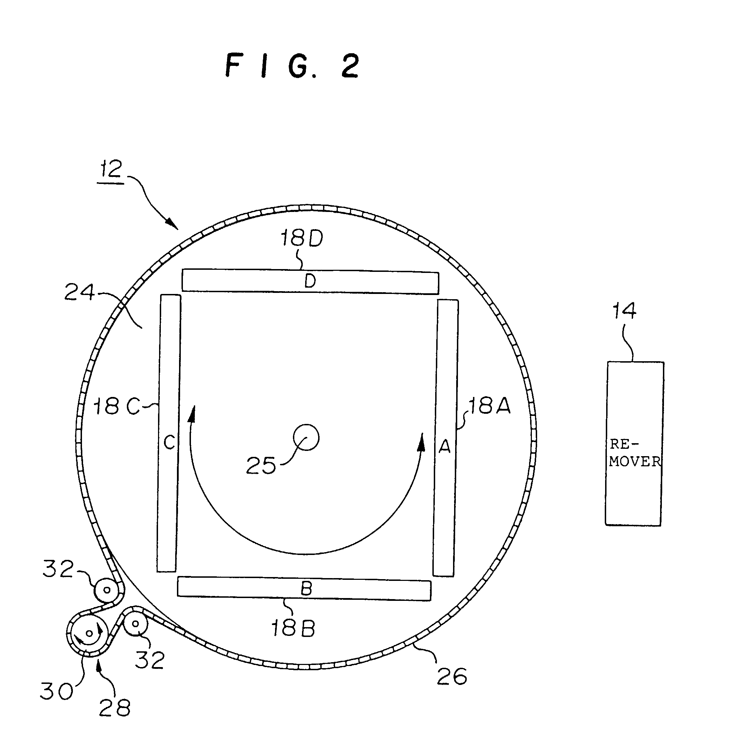

In Figure 1 is shown an entire perspective view of the handling apparatus 10 for glass plate materials according to the embodiment. The handling apparatus 10 shown in this Figure comprises a stocker 12 and a remover 14. The stocker 12 includes four of "A" rest 18A, "B" rest 18B, "C" rest 18C and "D" rest 18D to stock four different kinds of glass plate materials 16A, 16B, 16C and 16D in terms of sizes as shown in Figures 1 and 2. The respective rests 18A - 18D include rectangular leaning sides which are formed by connecting a plurality of longitudinal frames 20 and a plurality of transverse frames 22. The respective leaning sides have a slant angle θ set to substantially 8° to prevent the leaning glass plate materials from toppling from the leaning sides.

The rests 18A - 18D are provided at equal intervals on a turntable 24 so as to be concentric with one another about a rotational shaft 25. The turntable 24 can be rotated to locate a selected rest among the rests 18A - 18D at a plate removing position wherein the remover 14 removes a glass plate material. After a glass plate material on the rest which has been located at the plate removing position is removed by the remover 14, the glass plate material is delivered to a transferring apparatus 23 by the remover 14, and the glass plate material is transferred to a cutting stage as a subsequent step by the transferring apparatus 23. Although four of the rests 18A - 18D are provided on the turntable 24 in the shown embodiment, the number of the rests is not limited to this figure, and the number of the rests may be two, three or not less than five.

On the other hand, a rotary device for the turntable 24 comprises a single endless chain 26 and a driving device 28 for driving the endless chain 26 as shown in Figures 1 and 2. As shown in Figure 2, the endless chain 26 is wound around a circumferential portion of the turntable 24 and around a driving sprocket 30 of the driving device 28. In accordance with the rotary device, when the driving sprocket 30 is rotated by a driving motor to move the endless chain 26 on the circumferential portion, the turntable 24 is rotated in the circling direction of the endless chain 26 by frictional resistance caused between the endless chain 26 and the turntable 24. Reference numeral 32 designates tensioner sprockets which apply tension to the endless chain 26. The tensioner sprockets 32 and 32 set the frictional resistance to an adequate value.

The rotary device wherein the endless chain 26 is adopted can rotate the turntable 24 in one rotational direction and the opposite rotational direction in endless fashion. This arrangement can locate a selected rest at the plate removing position by the shortest moving distance.

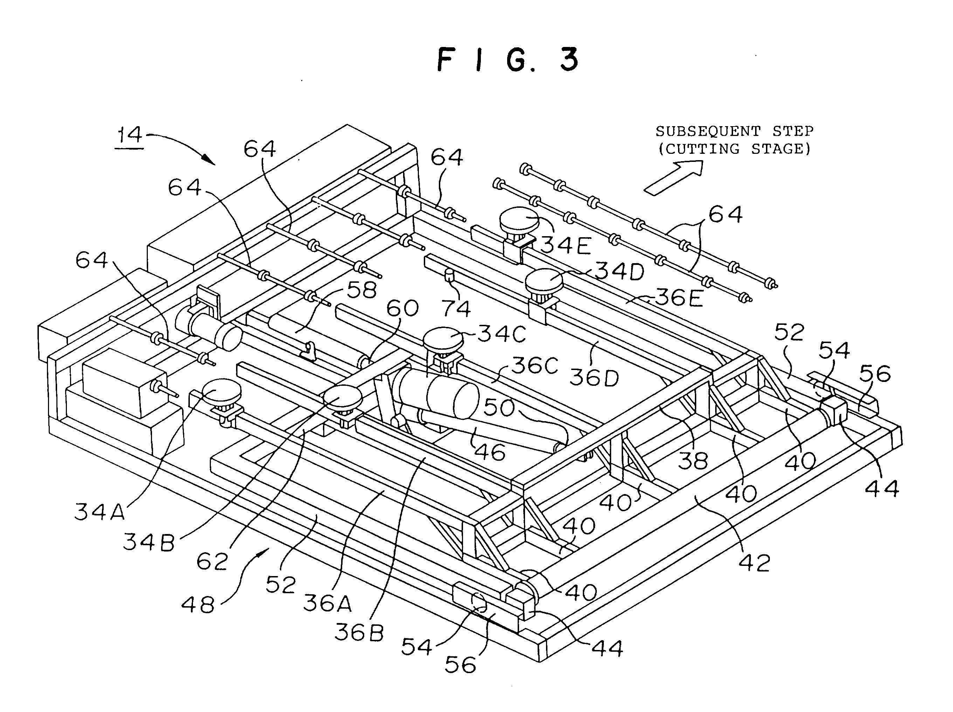

As shown in Figures 1 and 3, the remover 14 includes five suction pads 34A, 34B, 34C, 34D and 34E which are provided, respectively, on arms 36A, 36B, 36C, 36D and 36E. In order to suck a large size of glass plate material, the outer arms 36A and 36E have the suction pads 34A and 34E provided thereon at such a position that the pads 34A and 34E are higher than the pads 34B - 34D on the inner arms when the arms are erected. The suction pads 34A - 34E are connected to a vacuum compressor, and the compressor can be operated to suck and hold a glass plate material leaned against a rest.

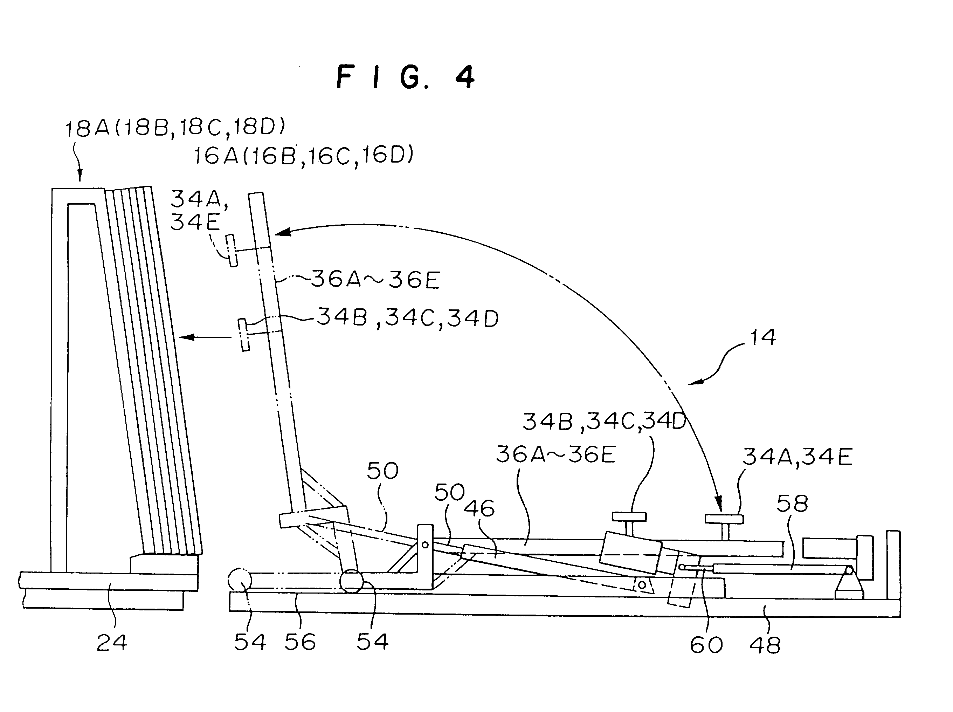

As shown in Figure 3, the arms 36A - 36E have lower edges thereof fixed to a supporting frame 38. The supporting frame 38 is coupled to a shaft 42 through short frames 40, and the shaft 42 has both ends rotatably supported by bearings 44. Since this arrangement allows the arms 36A - 36E to rotate about the shaft 42, the arms can turn in a range from a suction position wherein the suction pads 34A - 34D can suck a glass plate material as shown by chain-dotted lines in Figure 4 from a position wherein the glass plate material can be delivered to the transferring apparatus 23 as shown by solid lines in Figure 4.

A power cylinder 46 for turning the arms 36A - 36E is provided on a main frame 48 on which the arms 36A - 36E are mounted. The power cylinder 46 has a piston 50 fixed to the supporting frame 38. When the power cylinder 46 is driven to extend the piston 50, the arms 36A - 36E are erected. When the piston 50 is withdrawn, the arms 36A - 36E are laid.

As shown in Figure 3, the bearings 44 for supporting the arms 36A - 36E are provided on carriage frames 52 which are provided in parallel with the arms 36A - 36E. The carriage frames 52 have rollers 54 rotatably provided thereon. The rollers 54 are carried on rails 56 in parallel with the carriage frames 52 so as to be movable on the rails. By moving the rollers 54 on the rails 56 to and fro, the arms 36A - 36E advances and withdraws with respect to a selected rest.

Another power cylinder 58 for advancing and withdrawing the arms 36A - 36E is fixed to the main frame 48. The power cylinder 58 has a piston 60 fixed to a frame 62 connected to the carriage frames 52. By driving the power cylinder 58 to extend the piston 60, the arms 36A - 36E are advanced toward a selected rest. By withdrawing the piston 60, the arms 36A - 36E are withdrawn from the selected rest.

The transferring apparatus 23 includes a multiple number of conveyer rollers 64. Some of the conveyer rollers 64 are provided on the main frame 48 as shown in Figure 3, and the remaining conveyer rollers 64 are provided at certain intervals from the main frame 48 toward the cutting stage. A glass plate material which has been delivered to the transferring apparatus 23 is transferred to the cutting stage by the conveyer rollers 64.

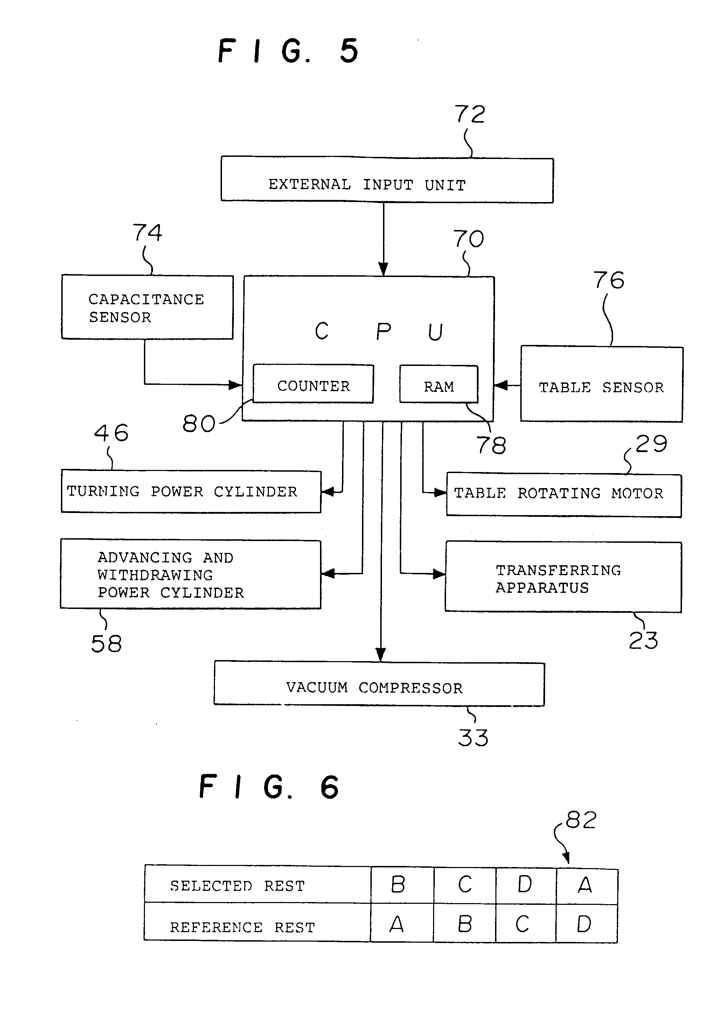

In Figure 5 is shown a block diagram of a control system for the handling apparatus 10. A CPU 70 shown in this Figure supervises and controls the entire handling apparatus 10 to drive and control a table rotating motor 29, the vacuum compressor 33, the turning power cylinder 46, the advancing and withdrawing power cylinder 58 and the transferring apparatus 23 based on information from an external input unit 72 such as a keyboard, a capacitance sensor 74 and a table sensor 76.

The capacitance sensor 74 is a sensor that detects the capacitance of a glass plate material, and that is provided on a leading portion of the arm 36D as shown in Figure 3. This arrangement allows the capacitance sensor 74 to detect the capacitance of a glass plate material sucked by the suction pads 34A - 34E., outputting a signal indicative of the detected capacitance to the CPU 70 shown in Figure 5. When the detected capacitance is outputted to the CPU 70 from the capacitance sensor 74, the CPU compares the detected capacitance with a value which is stored in a RAM as the capacitance corresponding to a single glass plate material. If the detected capacitance outputted from the capacitance sensor 74 is different from the value stored in the RAM 78, that is to say, if two glass plate materials or more are simultaneously held, the turning power cylinder 46 or the advancing and withdrawing power cylinder 58 is operated to carry out a plate separating operation. The plate separating operation will be described later.

The table sensor 76 is a sensor that detects a rest which is located at the plate removing position on the current stage. The table sensor may be provided on the remover 14 for instance. When information about the rest detected by the table sensor 76 is outputted to the CPU 70, the CPU 70 operates the table rotating motor 29 based on the information outputted form the table sensor and on selection information about a rest selected by the external input unit 72. A method for operating the table rotating motor 29 will be described later.

The CPU 70 includes a counter 80 which stores the number of the glass plate material 16A - 16D leaned against the rests 18A -18D with respect to each of the rests 18A -18D. Whenever a glass plate material is removed, the counter is decremented by one. When new glass plate materials are leaned against a rest, the counter is incremented by an increased number by inputting the increased number from the external input unit 72. The number of the glass plate materials which has stored in the counter 80 is read out by the CPU 70 when a glass plate material is sucked. The CPU 70 operates the advancing and withdrawing power cylinder 58 based on the number read out. A method for operating the advancing and withdrawing power cylinder 58 will be described later.

Next, the operation of the handling apparatus 10 thus constructed will be explained, referring to the block diagram shown in Figure 5.

For example, a case wherein a glass plate material 16A leaned against the "A" rest 18A is removed will be explained. First, when the rest which is located at the plate removing position is not the rest 18A, the CPU 70 drives the table rotational motor 29 to rotate the turntable 24 based on information from the table sensor 76 in accordance with the designation of the rest 18A by an input operation through the external input unit 72. When the table sensor 76 outputs a signal indicating that the rest 18A is detected, the CPU 70 stops the table rotational motor 29. Thus, the "A" rest 18A is located at the plate removing position.

Next, the CPU 70 reads out the stocking number of the glass plate materials 16A on the rest 18A from the counter 80. The CPU controls the advancing and withdrawing power cylinder 58 in accordance with the stocking number to set the optimum position of the arms 36A - 36E to the rest 18A. If the position of the arms 36A - 36E is too close to or too apart from the top glass plate material 16A leaned against the rest 18A, the suction pads 34A - 34E can not suck the top glass plate material 16A when the arms 36A - 36E are erected. In order to cope with this problem, the advancing and withdrawing power cylinder 58 locates the arms 36A - 36E at such a position that the suction pads 34A - 34E are assured of sucking the top glass plate material 18A.

Next, when the arms 36A - 36E is set at the optimum position, the CPU 70 operates the turning power cylinder 46 to erect the arms 36A - 36E, pushing the suction pads 34A - 34E against the top glass plate material 16A. Then, the CPU 70 operates the compressor 33 to suck and hold the top glass plate material 16A by the suction pads 34A - 34E. Then, the CPU 70 operates the turning power cylinder 46 to slightly turn the arms 36A - 36E toward a lying direction, separating the sucked and held top glass plate material 16A from a second glass plate material 16A by a certain space.

Next, the CPU 70 compares the capacitance outputted from the capacitance sensor 74 with the value which is stored in the RAM 78 as the capacitance corresponding to a single glass plate material. When the detected capacitance conforms to the stored value, the CPU 70 operates the turning power cylinder 46 to lay the arms 36A - 36E, delivering the sucked top glass plate material 16A to the transferring apparatus 23. When the detected capacitance does not conform to the stored value, that is to say, when a plurality of glass plate materials are held together because of adhesion of a second glass plate material 16A or subsequent ones to the top glass plate material 16A, the CPU 70 operates the turning power cylinder 46 to slightly move the arms 36A - 36E to and fro in an advancing and withdrawing direction, applying vibration to the glass plate material 16A. The application of the vibration separates the second glass plate material or subsequent ones 16A from the top glass plate material 16A. Whether the separation is completed or not can be detected by the capacitance outputted from the capacitor sensor 74. The plate separating operation is continuously carried out until the separation is completed. When it is detected that the separation is completed, the CPU 70 operates the turning power cylinder 46 to lay the arms 36A - 36E, delivering the top glass plate material 16A to the transferring apparatus 23. Thus, it is assured that the glass plate material 16A are transferred from the rest 18A to the transferring apparatus 23 one by one.

When a glass plate material 16A has been transferred to the transferring apparatus 23, the CPU 70 operates the transferring apparatus 23 to transfer the glass plate material 16A toward the cutting stage. The basic operations of the handling apparatus 10 are as stated above.

The handling apparatus 10 according to this embodiment has a table 82 shown in Figure 6 stored in the RAM 78 in the CPU 70. The table 82 includes two of subtable for selected rests and subtable for reference rests, and the subtables are read out by the CPU 70 when a signal indicative of a selected rest is outputted from the external input unit 72. For example, when the "B" rest 18B is selected on the external input unit 72, the CPU 70 determines whether the rest which is located at the removing position on the current stage is the "A" rest 18A or not. The CPU operates the table rotational motor 29 based on the determination.

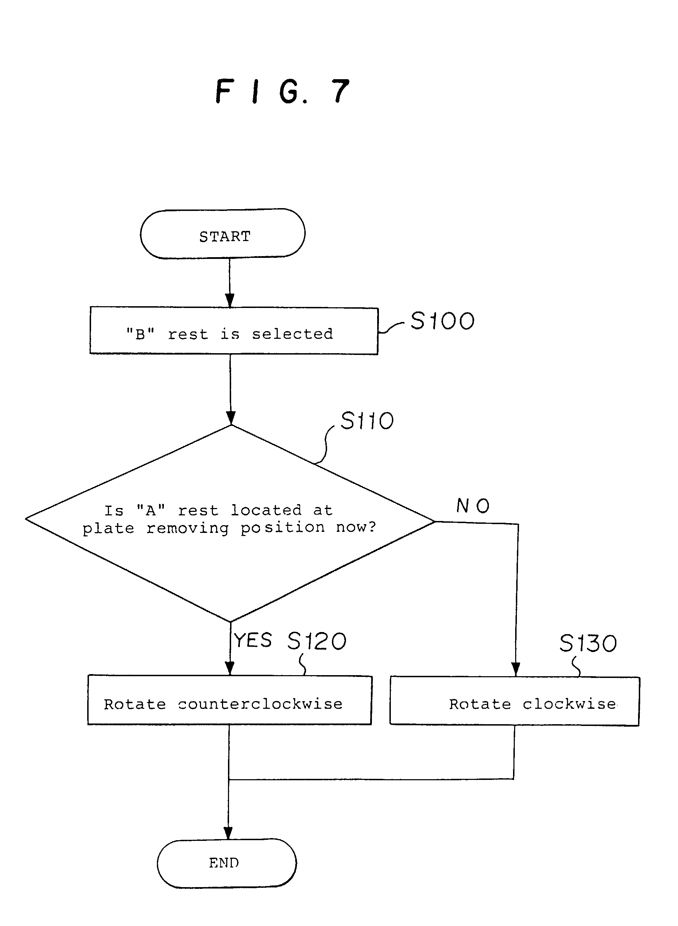

Now, a method for operating the table rotational motor 29 will be explained, referring to a flowchart of Figure 7. First, when the "B" rest 18B is selected (S100), the CPU 70 determines whether the rest which is located at the plate removing position on the current stage is the "A" rest 18A or not (S110). When the "A" rest 18A is located at the plate removing position, the table rotational motor 29 rotates the driving sprocket 30 in the counterclockwise direction in Figure 2 to rotate the turntable 24 counterclockwise, locating the "B" rest 18B at the plate removing position (S120). Thus, the "B" rest 18B can be located at the plate removing position by the shortest moving distance. On the other hand, when the rest which is located at the plate removing position on the current stage is not the "A" rest 18A, the table rotational motor 29 rotates the driving sprocket 30 in the clockwise direction in Figure 2 to rotate the turntable 24 clockwise, locate the "B" rest 18B at the plate removing position (S130). Thus, the "B" rest 18B can be located at the plate removing position by the shortest moving distance.

As shown in Figure 6, a rest as the comparison reference changes, depending on a selected rest. As a result, whichever rest is selected, the selected rest can be located at the plate removing position by the shortest moving distance.

As explained, the handling apparatus for plate-shaped materials according to the present invention can adopt the endless member as tile rotary device for the turntable to locate a selected rest at the position of the remover by the shortest moving distance. In accordance with the present invention, handling plate-shaped materials can be smoothly carried out without a waste of time.

## Claims

1. A handling apparatus for plate-shaped materials (16A - 16D) comprising:
a plurality of rests (18A - 18D) for supporting plate-shaped materials (16A- 16D) in a leaning position;
a turntable (24) which has the rests (18A - 18D) provided thereon and which is rotatably provided;
a remover (14) which is provided near to the turntable (24) and which can remove a plate-shaped material (16A - 16D) leaned against one of the rests (18A - 18D) provided on the turntable (24); and
a rotary device (26, 28) which can rotate the turntable (24) to locate a selected rest (18A - 18D) among the rests (18A - 18D) at a position to remove the plate-shaped material (16A - 16D) by the remover (14);
wherein the rotary device (26, 28) comprises:
an endless member (26) wound on a circumferential portion of the turntable (24); and
a driving motor (29, 30) for moving the endless member (26) on the circumferential portion to rotate the turntable (24) in a certain direction.

2. A handling apparatus according to Claim 1, wherein the endless member (26) is a chain, and wherein when the chain (26) is moved on the circumferential portion by the driving motor (29, 30), the turntable (24) is rotated by frictional resistance between the chain (26) and the turntable (24).

3. A handling apparatus according to Claim 1 or 2, wherein the remover (14) comprises:
a suction device (34A - 34E) for holding a plate-shaped material (16A - 16D) by suction;
an arm (36A - 36E) which has the suction device (34A - 34E) provided thereon and which is rotatably provided;
a turning device (46) which can turn the arm (36A - 36E) to move the arm (36A - 36E) between an erecting position to suck the plate-shaped material (16A - 16D) by the suction device (34A - 34E) and a lying position to deliver the plate-shaped material (16A - 16D) to a transferring apparatus (23); and
an advancing and withdrawing device (58) which can advance and withdraw a supporting member (52) for rotatably supporting the arm (36A - 36E) with respect to the selected rest (18A - 18D).
